# EUROPÄISCHE PATENTSCHRIFT

(11) **EP 0 753 434 B1**
(45) Veröffentlichungstag und Bekanntmachung des Hinweises auf die Patenterteilung: **05.04.2000**
(21) Anmeldenummer: 96110801.6
(22) Anmeldetag: 04.07.1996
(51) Int. Cl.: B60R 21/22, B60R 21/02, B60N 2/42

(54) **Airbaganordnung**
Air bag assembly
Agencement de sac gonflable

(30) Priorität: 13.07.1995 DE 19525441
(43) Veröffentlichungstag der Anmeldung: 15.01.1997
(73) Patentinhaber: Van Riesen GmbH u. Co. KG, D-32130 Enger (DE)
(72) Erfinder: Friedrich, Matthias, 32120 Hiddenhausen (DE); Wölfl, Volkmar, 32602 Vlotho (DE)
(74) Vertreter: Vollmann, Heiko, Dipl.-Ing.

(56) Entgegenhaltungen:
- DE-A- 2 806 548
- DE-A- 4 342 959
- DE-U- 29 509 136
- FR-A- 2 133 239
- US-A- 2 861 626
- US-A- 3 623 768
- US-A- 5 222 761
- US-A- 5 492 361

## Beschreibung

Die Erfindung betrifft eine Airbaganordnung für einen Fahrzeugsitz, insbesondere für den Rücksitz eines Kraftfahrzeuges.

Die Anwendung von Airbags in Kraftfahrzeugen zählt heutzutage zum Stand der Technik. In der Praxis durchgesetzt haben sich bisher Airbags für die Vordersitze, sei es im Lenkrad, im Armaturenbrettbereich und auch in den Seiten. Es hat sich jedoch herausgestellt, daß es erstrebenswert ist, nicht nur die vorderen, sondern auch andere Passagiere durch Airbagsysteme zu schützen.

Aus der gattungsbildenden DE 91 11 206 U1 sowie DE 93 15 509 U1 ist es bekannt, Airbags sowohl für die vorderen als auch für die hinteren Passagiere im Fahrzeug vorzusehen. Die dort beschriebenen zusätzlichen Airbags dienen zum einen als Schutz beim Seitenaufprall, zum anderen auch als Schutz der auf den Rücksitzen befindlichen Passagiere beim Frontalaufprall. Letztere Airbags sind im Bereich der Kopfstützen der Vordersitze angeordnet. Diese Bauart ist jedoch zum Schutz von auf den Rücksitzen befindlichen Personen nur bedingt geeignet. Zum einen stellt sich das Problem der höhenmäßig korrekten Anordnung, insbesondere dann, wenn wie üblich, die Vordersitze höhen- und neigungsverstellbar sind, zum anderen aber das Problem der Baulänge des Fahrzeuges. Bei Fahrzeugen nämlich, die einen großen Abstand zwischen Vorder- und Rücksitzlehne aufweisen, sind solche Airbags schon aus räumlichen Gründen nicht praktikabel. Des weiteren stellt es ein besonderes Problem dar, mit solchen Airbaganordnungen in Kindersitzen - seien es Add-on- oder integrierte Kindersitze - befindliche Kinder zuverlässig zu schützen.

Aus DE 92 08 309 U ist zwar eine Airbaganordnung für einen Add-on-Kindersitz bekannt, diese Anordnung wiederum ist jedoch nur für den Add-on-Kindersitz, nicht jedoch für den normalen Fahrzeugsitz geeignet. Des weiteren beinhaltet die dort dargestellte Airbaganordnung ein hohes Gefahrenpotential, da die Oberseite der Airbaganordnung als Spieltisch nutzbar ist. Die darauf befindlichen Gegenstände werden im Auslösefall geschoßartig katapultiert, was zu erheblichen Verletzungen des im Sitz befindlichen Kindes führen kann.

Aus der nachveröffentlichten DE 295 09 136 Ul ist eine Airbaganordnung für einen Autokindersitz bekannt, bei der der Airbag an einen Arm so angebracht ist, daß er in Fahrrichtung gesehen vor dem Kind liegt. Auch diese Anordnung ist ausschließlich für Kindersitze, nicht jedoch für normale Fahrzeugsitze geeignet. Bei einer entsprechenden Airbaganordnung an üblichen Autositzen wäre eine solche Anordnung sehr hinderlich, da der Sitz ausschließlich zur Personenbeförderung und nur noch sehr beschränkt zur Lastenförderung geeignet wäre. Der oberhalb und vor dem Sitz befindliche Airbag schränkt die Raumausnutzung ganz erheblich ein.

Aus DE 43 42 959 A1 ist eine ähnliche Airbaganordnung zur Sicherung eines auf dem Fahrzeugsitz mitgeführten Kindes bekannt. Dort ist der Airbag in der Kopfstütze des Sitzes angeordnet, wobei zur Sicherung des Kindes die an einem geschlossenen U-förmigen Bügel angebrachte Kopfstütze um etwa 90° heruntergeschwenkt wird, so daß das Kind von dem Bügel umschlossen wird und den Airbag vor sich hat. Durch diesen geschlossenen Bügel könnte jedoch das kind, bei einem insbesondere schweren Unfall, innerhalb des Bügels eingeklemmt werden.

Wenn die Schwenkmechanik des Bügels beschädigt wird oder wenn durch einen Aufprall des Fahrzeugs das Dach eingedrückt wird, kann der Bügel nicht mehr nach oben geschwenkt werden, dann ist es schwierig, das Kind nach oben aus dem Bügel herauszuziehen. Der Bügel könnte daher ein zusätzliches Gefahrenpotential darstellen. Auch ist die dort beschriebene Anordnung ausschließlich zur Sicherung von Kindern, nicht jedoch von Erwachsenen einsetzbar.

Aus US-PS 3,623,768 ist eine Airbaganordnung bekannt, bei der der Airbag an einem seitlich vorspringenden Arm eines Armpaares angeordnet ist. Diese seitlich aus der Rückenlehne austretenden Arme sind mit einer Auslösemechanik verbunden, die dafür sorgt, daß die Arme bei einem Unfall nach vorne schnellen und so die im Sitz befindliche Person im Sitz halten und den dann zwischen den Armen auslösenden Airbag günstig positionieren. Bei dieser Anordnung bilden die Arme neben dem Airbag ein mechanisches Rückhaltemittel. Auch hier könnte insbesondere bei schweren Deformationen des Fahrzeuges stets die Gefahr bestehen, daß die Mechanik versagt und so die durch die Arme im Sitz fixierte Person nicht oder nur schwer geborgen werden kann. Darüber hinaus ist diese Konstruktion aufwendig und nicht versenkbar, so daß ein so ausgestatter Sitz für Lastentransporte nur noch bedingt einsetzbar ist.

Vor diesem Stand der Technik liegt der Erfindung die Aufgabe zugrunde, eine Airbaganordnung für einen Fahrzeugsitz, insbesondere für den Rücksitz eines Kraftfahrzeuges zu schaffen, die einerseits aufgrund ihrer Positionierung einen guten Aufprallschutz für die Insassen des Fahrzeuges gewährleistet, andererseits jedoch die Beladung des Fahrzeuges möglichst wenig behindert. Darüberhinaus soll die Airbaganordnung so gestaltet sein, daß gleichermaßen Schutz sowohl für Erwachsene als auch für Kinder, sei es im Kindersitz oder auf einem Unterlegkissen, gegeben ist.

Diese Aufgabe wird gemäß der Erfindung durch die im Anspruch 1 aufgeführten Merkmale gelöst. Die Erfindung sieht demgemäß einen seitlich am Ende eines sitz- oder lehnenseitig befestigten Trägers angeordneten Airbag vor, der so am Träger angeordnet ist, daß eine zum Träger benachbart sitzende Person von dem Airbag im wesentlichen nach vorn hin geschützt wird. Der Träger ist dabei um eine Achse aus einer Ruheposition in eine Arbeitsposition und umgekehrt schwenkbar angeordnet, die etwa parallel zu einer zwischen Sitzfläche und Lehnfläche gebildeten Schnittachse liegen. Weiterhin ist eine Ausnehmung in der Sitz- oder Lehnfläche vorgesehen, in die der Airbag zusammen mit dem Träger in Ruheposition derart einschwenkbar ist, daß der Airbag und der Träger bündig mit der Sitz- und Lehnfläche abschließen.

Die Erfindung stellt somit eine Airbaganordnung zur Verfügung, die sowohl hinsichtlich der Positionierung als auch hinsichtlich der Beladungsaspekte besonders günstig ist. Sie ermöglicht zudem erstmals in gleicher Weise einen guten Aufprallschutz sowohl für Kinder als auch für Erwachsene, wobei durch die Einschwenkbarkeit von Träger und Airbag in die Sitz- oder Lehnfläche sich eine Belademöglichkeit wie bei herkömmlichen Fahrzeugsitzen ohne Airbaganordnung ergibt. Der konstruktive Aufbau ist zudem einfach, was hinsichtlich der Herstellungskosten und Zuverlässigkeit der einzelnen Funktionselemente günstig ist.

Insbesondere bei der Verwendung eines Add-on-Kindersitzes ist es zweckmäßig, entweder den Airbag am Träger oder aber den Träger selbst höhenverstellbar auszubilden, um den Airbag optimal auf die Größe der damit zu schützenden Person und deren Sitzposition einzustellen. Dies kann konstruktiv in einfacher Weise dadurch erfolgen, daß beispielsweise der Airbag an der auf einer im Träger geführten Spindel laufenden Mutter befestigt ist, wobei die Spindel durch eine stirnseitige Rändelschraube drehbar ist. Der Airbag kann dann stufenlos in bezug auf den Träger mittels dieses vertikalen Verstellsystems höhenverstellt werden, wobei durch die Mutter-Spindel-Anordnung stets Selbsthemmung gegeben ist, so daß die im Auslösefall auftretenden Rückstellkräfte sicher aufgenommen werden können.

Um nicht nur eine Anpassung in Höhenrichtung, sondern auch in Richtung quer dazu zu ermöglichen, d. h., den Abstand zwischen Airbag und Lehnenfläche einstellen zu können, ist der Träger vorteilhaft längenverstellbar ausgebildet.

Um die im Auslösefall auftretenden Rückstellkräfte sicher aufnehmen zu können, ist es zweckmäßig, den Träger in seiner Arbeitsposition verriegelbar auszubilden. In einfacher Weise kann dies durch eine mechanische Formschlußsicherung, die vorzugsweise selbsttätig einschnappt, erfolgen oder aber auch elektromechanisch in Verbindung mit einer entsprechenden Logikschaltung.

Wenn die erfindungsgemäße Airbaganordnung für die Rücksitzbank eines Kraftfahrzeuges vorgesehen werden soll, so wird sie bevorzugt nach Art der ein- und ausschwenkbaren Mittellehne angeordnet, wobei dann zu beiden Seiten des Trägers ein Airbag angeordnet ist, der jeweils die links bzw. rechts vom Träger sitzende Person schützt. Die beiden Airbags können unabhängig voneinander höhenverstellbar sein.

Ein noch kompakterer Aufbau ergibt sich, wenn nicht nur der Träger in die Sitz- bzw. Lehnenfläche einschwenkbar ist, sondern auch der bzw. die Airbags in den Träger einschwenkbar sind. Auch in diesem Fall sollten die Airbags in ihrer ausgeschwenkten Stellung nach Möglichkeit selbsttätig verriegelt sein und nur durch gezielte Betätigung eines Hebels oder Knopfes in den Träger einschwenkbar sein. Eine solche Anordnung erleichtert das Ein- und aussteigen in bzw. aus dem Sitz und ermöglicht beispielsweise bei einseitiger Sitznutzung die volle Raumnutzung auf der anderen Sitzseite, wenn der entsprechende Airbag in den Träger eingeschwenkt ist.

Wenn, wie in der bevorzugten Ausführungsform sowohl der Träger in eine Ausnehmung der Sitz- oder Lehnenfläche einschwenkbar ist als auch die Airbags ihrerseits seitlich in den Träger ein bzw. aus diesem herausschwenkbar sind, dann sollte eine entsprechende Schaltungsanordnung vorgesehen sein, die sicherstellt, daß der vom fahrzeugeigenen Crashsensor abgegebene Auslöseimpuls nur dann an einen Zündsatz eines Airbags weitergeleitet wird, wenn sichergestellt ist, daß einerseits der Träger in Arbeitsposition befindlich und andererseits der jeweilige Airbag ausgeschwenkt ist. Solche Schaltungsanordnungen können durch entsprechende Schalter an den Gelenken realisiert werden, die in Reihe geschaltet werden. Es empfiehlt sich, zusätzlich eine Kontrolleuchte vorzusehen, welche die Auslösebereitschaft des Airbags anzeigt.

Die Erfindung ist nachfolgend anhand von in der Zeichnung dargestellten Ausführungsbeispielen näher erläutert. Es zeigen:
- Fig. 1: in stark vereinfachter Darstellung eine Rücksitzbank eines Kraftfahrzeuges mit der erfindungsgemäßen Airbaganordnung in perspektivischer Darstellung und
- Fig. 2: eine alternative Anordnung ebenfalls in perspektivischer Darstellung.

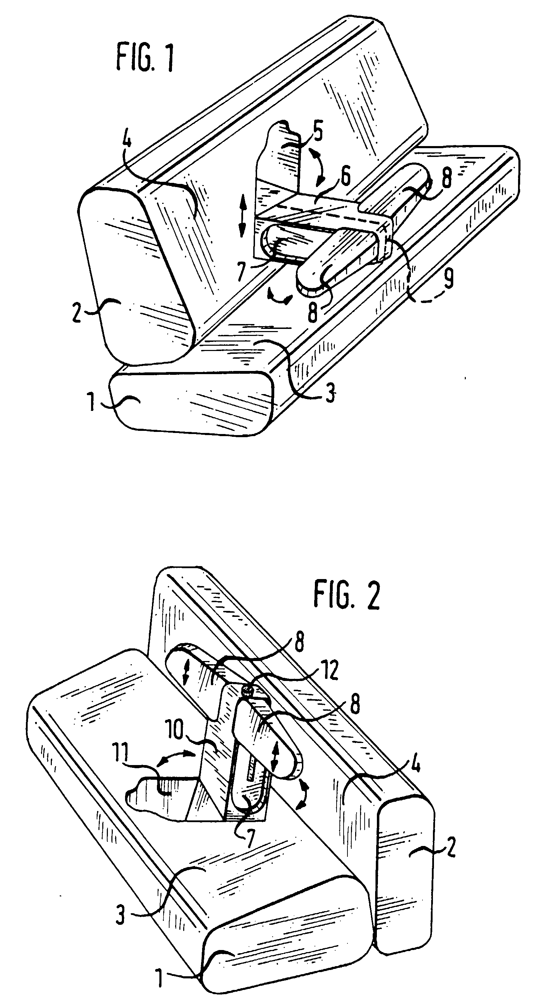

Die anhand von Fig. 1 dargestellte Rücksitzbank eines Kraftfahrzeuges besteht aus einem Sitzpolster 1 sowie einer Rückenlehne 2, die eine Sitzfläche 3 und eine Lehnenfläche 4 zur Abstützung eines oder mehrerer Gegenstände, einer Person oder auch eines Kindersitzes bilden. Im übrigen kann in der Lehnenfläche 4 oder der Sitzfläche 3, also an beliebiger Stelle der Sitzbank auch ein Kindersitz integriert sein.

Bei der Ausführung nach Fig. 1 ist in der Rückenlehne 2 etwa mittig eine Ausnehmung 5 vorgesehen, aus der ein Träger 6 ragt, der seinerseits seitliche Ausnehmungen 7 aufweist, aus denen Airbags 8 ausschwenkbar sind. Die Figuren zeigen die Airbags 8 in ausgeschwenkter Stellung. Der Träger 6 ist am Fuß der Ausnehmung 5 schwenkbar an der Rückenlehne 2 angelenkt, er ist im übrigen innerhalb der Ausnehmung 5 höhenverstellbar angeordnet, und zwar in Raststufen. Auf diese Weise können die seitlich am Ende des Trägers 6 ausgeschwenkten Airbags 8 in ihrer Höhe verstellt werden. Dies ist insbesondere bei Verwendung von Kindersitzen oder sogenannten Boostern zweckmäßig. Um die Höhe der Airbags 8 für den rechten und linken Sitz unabhängig voneinander verstellen zu können, kann der Träger 6 längsgeteilt ausgebildet sein, wie dies in Fig. 1 anhand der unterbrochenen Linie 9 angedeutet ist, oder aber es können zwei Träger 6 mit jeweils einem seitlich ausschwenkbaren Airbag 8 vorgesehen sein.

Um die Airbags 8 nicht nur in Höhenrichtung, sondern auch in ihrem Abstand zur Lehnenfläche 4 anpassen zu können, ist der Träger 6 teleskopierbar ausgebildet und in Stufen oder stufenlos längenverstellbar. Die zugehörige Verstelleinrichtung ist so auszubilden, daß in jeder Stellung eine formschlüssige Verriegelung in Achsrichtung des Trägers 6 sichergestellt ist, damit im Fall eines Auslösens des Airbags die Rückstellkräfte sicher aufgenommen werden können.

Bei der Ausführung nach Fig. 2 ist ein Träger 10 vorgesehen, der ähnlich dem Träger 6 aufgebaut ist und an dessen Enden ebenfalls zwei Airbags 8 seitlich ausschwenkbar angeordnet sind. Auch am Träger 10 sind Ausnehmungen 7 vorgesehen, welche die Airbags in Ruheposition aufnehmen. Der Träger 10 selbst ist ebenfalls schwenkbar gelagert, und zwar um eine parallel zu der zwischen Sitzfläche 3 und Lehnenfläche 4 gebildeten Schnittachse angeordnete Schwenkachse. Er ist im Boden einer Ausnehmung 11 im tragenden Teil des Sitzpolsters 1 angelenkt und bei eingeschwenkten Airbags 8 bündig in dieses einschwenkbar. In der in Fig. 2 dargestellten Arbeitsposition ist der Träger 10 verriegelt, ebenso die seitlich ausgeschwenkten Airbags 8. Ein Einschwenken ist nur nach Betätigung einer nicht dargestellten Sicherungstaste möglich.

Der Träger 10 ist nicht höhenverstellbar, statt dessen sind jedoch die Airbags 8 am Träger 10 höhenverstellbar. Hierzu ist innerhalb des Trägers eine sich in Längsrichtung des Trägers erstreckende Spindel drehbar gelagert, an deren Spindelmutter die Airbags 8 abgestützt sind. Die Spindel kann mittels eines am Ende des Trägers 10 angeordneten Rändelrades 12 gedreht werden, wodurch die Airbags 8 in ihrer Höhe verstellt werden. Um eine gesonderte Höhenverstellung des rechten und des linken Airbags vorzusehen, können entweder zwei gesonderte Träger mit Einzelverstellung oder aber ein gemeinsamer Träger mit zwei Spindeln vorgesehen sein.

In beiden Ausführungen sind sowohl am Gelenk des Trägers 6 bzw. des Trägers 10 als auch an den Gelenken zwischen Träger und Airbag Mikroschalter vorgesehen, welche nur dann schließen, wenn sich das jeweilige Gelenk in Arbeitsposition befindet, d. h. der Träger 6 aus der Rückenlehne 2 ausgeschwenkt bzw. der Träger 10 aus dem Sitzpolster 1 ausgeschwenkt und die Airbags 8 aus den Ausnehmungen 7 ausgeschwenkt und in dieser Arbeitsposition verriegelt sind. Diese Mikroschalter sind so in Reihe geschaltet, daß der vom Crashsensor des Fahrzeuges ausgehende Zündimpuls nur dann an den im Airbag 8 befindlichen Treibsatz weitergeleitet wird, wenn die bestimmungsgemäße verriegelte Position erreicht ist. Bei Nichtbenutzung werden die Airbags in die Ausnehmungen 7 des Trägers 6 bzw. des Trägers 10 eingeschwenkt, wonach dann der Träger 6 in die Ausnehmung 5 der Rückenlehne 2 bzw. der Träger 10 in die Ausnehmung 11 des Sitzpolsters 1 geschwenkt wird. In dieser Einschwenkstellung (Ruheposition) schließt der Träger 6 bündig mit der Lehnenfläche 4 und der Träger 10 bündig mit der Sitzfläche 3 ab.

Die Airbags 8 sind jeweils so seitlich am Ende des Trägers 6 bzw. des Trägers 10 angeordnet, daß sie der daneben sitzenden Person - sei es einem Erwachsenen oder einem Kind oder auch einem in einem Kindersitz angeordneten Kind - Schutz insbesondere in Richtung nach vorn geben. Der Airbag erstreckt sich also in aufgeblasenem Zustand ähnlich wie ein seitlich am Trägerende angebrachter gestreckter Ballon.

Bei der Ausführung nach Fig. 1 bildet der Träger 6 zugleich ein Mittelarmlehne. Die Airbags 8 sind in ihrer Außenkontur so geformt, daß ein Ablegen von Gegenständen auf denselben nicht möglich ist, um ein Hochschleudern von darauf abgelegten Gegenständen zu verhindern.

### Bezugszeichenliste

- 1 -: Sitzpolster
- 2 -: Rückenlehne
- 3 -: Sitzfläche
- 4 -: Lehnenfläche
- 5 -: Ausnehmung
- 6 -: Träger
- 7 -: Ausnehmungen im Träger
- 8 -: Airbags
- 9 -: unterbrochene Linie
- 10 -: Träger
- 11 -: Ausnehmung
- 12 -: Rändelrad

## Patentansprüche

1. Airbaganordnung für einen Fahrzeugsitz, insbesondere für den Rücksitz eines Kraftfahrzeuges, dadurch gekennzeichnet, daß der Airbag (8) seitlich am Ende eines sitz- oder lehnenseitig befestigten Trägers (6; 10) derart angeordnet ist, daß eine zum Träger (6; 10) benachbart sitzende Person von dem Airbag (8) im wesentlichen nach vorne hin geschützt wird, wobei der Träger (6; 10) um eine Achse aus einer Ruheposition in eine Arbeitsposition und umgekehrt schwenkbar angeordnet ist, die etwa parallel zu einer zwischen Sitzfläche (3) und Lehnenfläche (4) gebildeten Schnittachse liegt, und daß der Träger (6; 10) mit dem daran befindlichen Airbag (8) in Ruheposition in einer Ausnehmung (5; 11) in der Sitz- oder Lehnenfläche (3; 4) bündig mit dieser abschließend liegt.

2. Airbaganordnung nach Anspruch 1, dadurch gekennzeichnet, daß der Airbag (8) am Träger (10) oder der Träger (6) selbst höhenverstellbar ist.

3. Airbaganordnung nach einem der vorhergehenden Ansprüche, dadurch gekennzeichnet, daß der Träger (6) längenverstellbar ist.

4. Airbaganordnung nach einem der vorhergehenden Ansprüche, dadurch gekennzeichnet, daß der Träger (6; 10) in seiner Arbeitsposition verriegelbar ist.

5. Airbaganordnung nach einem der vorhergehenden Ansprüche, dadurch gekennzeichnet, daß zu beiden Seiten des Trägers (6; 10) ein Airbag (8) angeordnet ist.

6. Airbaganordnung nach einem der vorhergehenden Ansprüche, dadurch gekennzeichnet, daß der Airbag (8) seitlich in den Träger (6; 10) einschwenkbar und zumindest in ausgeschwenkter Stellung in dieser verriegelbar ist.

7. Airbaganordnung nach einem der vorhergehenden Ansprüche, dadurch gekennzeichnet, daß eine Schaltung vorgesehen ist, die den Auslöseimpuls im Falle einer Fahrzeugkollision nur dann an den Treibsatz des Airbags weiterleitet, wenn der Träger in Arbeitsposition verriegelt und der Airbag in ausgeschwenkter verriegelter Stellung befindlich ist.

## Claims

1. An airbag arrangement for a vehicle seat, in particular for the rear seat of a motor vehicle, characterised in that the airbag (8) is arranged in such a manner laterally at the end of the carrier (6:10) which is fastened on the side of the seat or of the back rest, that a person seated neighbouring the carrier (6, 10) is essentially protected towards the front by the airbag (8), wherein the carrier (6;10) is pivotably arranged about an axis from a rest position into a working position and vice versa, said axis lying approximately parallel to a cutting axis formed between the seat surface (3) and the back rest surface (4); and that the carrier (6, 10) together with the airbag (8) located thereon, in the rest position, lies in a recess (5, 11) in the seat surface or back rest surface (3;4) and is flushly occluded with this surface.

2. An airbag arrangement according to claim 1, characterised in that the airbag (8) is adjustable in height on the carrier (10), or the carrier (6) itself is adjustable in height.

3. An airbag arrangement according to one of the preceding claims, characterised in that the carrier is adjustable in length.

4. An airbag arrangement according to one of the preceding claims, characterised in that the carrier (6; 10) is lockable in its working position.

5. An airbag arrangement according to one of the preceding claims, characterised in that an airbag (8) is arranged at both sides of the carrier (6; 10).

6. An airbag arrangement according to one of the preceding claims, characterised in that the airbag (8) can be laterally pivoted into the carrier (6; 10), and at least in the pivoted-out position may be locked in this position.

7. An airbag arrangement according to one of the preceding claims, characterised in that a switch is provided which, in the case of a vehicle collision, transmits the release impulse further to the propellant charge of the airbag only then, when the carrier is locked in the working position and the airbag is situated in the pivoted-out, locked position.

## Revendications

1. Dispositif d'air-bag pour un siège de véhicule, notamment pour le siège arrière d'un véhicule automobile, caractérisé en ce que l'air-bag (8) est disposé latéralement, à l'extrémité d'un support (6 ; 10) fixé du côté du siège ou du dossier, de telle sorte qu'une personne assise au voisinage du support (6 ; 10) soit protégée essentiellement vers l'avant par l'air-bag (8), le support (6 ; 10) étant monté de manière à pouvoir pivoter autour d'un axe depuis une position de repos jusque dans une position de travail et inversement, position de travail qui est approximativement parallèle à un axe d'intersection formé entre la surface (3) du siège et la surface (4) du dossier, et en ce que le support (6 ; 10), avec l'air-bag (8) se trouvant dessus, est, dans la position de repos, situé dans un évidement (5 ; 11) formé dans la surface (3 ; 4) du siège ou du dossier, en se terminant au ras de cette surface.

2. Dispositif d'air-bag selon la revendication 1, caractérisé en ce que l'air-bag (8) situé sur le support (10) ou le support (6) lui-même est réglable en hauteur.

3. Dispositif d'air-bag selon l'une des revendications précédentes, caractérisé en ce que le support (6) est réglable dans le sens de la longueur.

4. Dispositif d'air-bag selon l'une des revendications précédentes, caractérisé en ce que le support (6 ; 10) est verrouillable dans sa position de travail.

5. Dispositif d'air-bag selon l'une des revendications précédentes, caractérisé en ce qu'un air-bag (8) est disposé des deux côtés du support (6 ; 10).

6. Dispositif d'air-bag selon l'une des revendications précédentes, caractérisé en ce que l'air-bag (8) peut pivoter latéralement en rentrant dans le support (6 ; 10) et est, au moins en position ressortie par pivotement, verrouillable dans cette dernière.

7. Dispositif d'air-bag selon l'une des revendications précédentes, caractérisé en ce qu'il est prévu un circuit qui, dans le cas d'une collision du véhicule, transmet l'impulsion de déclenchement à l'ensemble propulseur de déploiement de l'air-bag uniquement lorsque le support est verrouillé en position de travail et que l'air-bag est situé dans la position ressortie par pivotement, verrouillée.
